# FASCICULE DE BREVET EUROPEEN

(11) **EP 0 962 380 B1**
(45) Date de publication et mention de la délivrance du brevet: **21.05.2003**
(21) Numéro de dépôt: 99440129.7
(22) Date de dépôt: 01.06.1999
(51) Int. Cl.: B62D 21/18, B62D 53/02, B62D 55/10

(54) **Structure de chassis pour véhicule de voirie**
Fahrzeuggestell für Arbeitsfahrzeuge
Frame structure for utility vehicle

(30) Priorité: 04.06.1998 FR 9807136
(43) Date de publication de la demande: 08.12.1999
(73) Titulaire: Alfred Kärcher GmbH & Co. KG, 71364 Winnenden (DE)
(72) Inventeur: Jungo, Nicolas, 68870 Barthenheim (FR)
(74) Mandataire: Burkard, Thierry

(56) Documents cités:
- US-A- 3 286 781
- US-A- 5 137 106

## Description

L'invention concerne une structure de châssis pour véhicule de voirie. Elle concerne plus particulièrement une structure de châssis destinée à des véhicules tels que des balayeuses urbaines articulées.

Les véhicules de ce type se composent, pour l'essentiel, d'un châssis articulé, comportant au moins deux essieux et auquel peuvent être reliés les moyens de nettoyage tels que des brosses ou balais, des moyens d'aspiration, un réceptacle pour recevoir les résidus aspirés, éventuellement un réservoir d'eau de capacité suffisante et un poste de commande.

Sur les véhicules de type connu, le châssis est en fait composé de deux demi-châssis, la partie avant recevant les moyens d'aspiration et la partie arrière recevant la cuve et les éléments de motorisation.

De ce fait, la partie centrale du châssis, à savoir la zone située entre les deux bords latéraux, doit rester libre.

Sous le demi-châssis avant sont disposés les moyens d'aspiration, notamment une buse d'aspiration coopérant avec les moyens de collecte des déchets, par exemple des brosses ou des balais et montée à l'extrémité d'un conduit relié à la cuve de collecte.

Le demi-châssis arrière reçoit les éléments de motorisation.

Cette conception impose l'utilisation de châssis à double poutre.

Les châssis classiques sont ainsi constitués de deux poutrelles parallèles, sur lesquelles sont montés les différentes parties du véhicule, la partie située entre les deux poutrelles recevant les éléments d'aspiration à l'avant et la motorisation à l'arrière.

Du fait de cette structure particulière, l'articulation entre les deux demi-châssis est délicate à réaliser, et exige la mise en oeuvre de moyens et d'éléments complexes et coûteux.

En effet, les véhicules tels que les balayeuses urbaines sont amenés à effectuer des mouvements de braquage fréquents et imprévus, parfois avec une amplitude importante.

Il est souvent difficile d'assurer une parfaite coordination entre les déplacements respectifs des deux demi-châssis, et ce d'autant plus qu'il est nécessaire dans le même temps de veiller au bon fonctionnement des moyens d'aspiration.

Le conduit d'aspiration qui relie la buse montée sous le demi-châssis avant à la cuve de collecte disposée sur le demi-châssis arrière est directement soumis aux diverses contraintes qui découlent de l'articulation entre les deux parties du châssis.

Les solutions connues sont techniquement satisfaisantes, mais elles impliquent des coûts de fabrication qui restent élevés. Par ailleurs, elles n'autorisent pas des interventions de maintenance ou de remplacement rapides.

De plus, les deux parties du châssis sont reliées par des flexibles, notamment hydrauliques, permettant de commander et contrôler depuis la partie avant des éléments montés sur la partie arrière.

Ceci génère des contraintes supplémentaires, dans la mesure où il est nécessaire de prévoir le passage de ces flexibles au niveau de l'articulation, tout en en préservant l'intégrité.

Le document US-A-3 286 781 décrit un véhicule de voirie monté sur un châssis selon le préambule de la revendication 1.

Les éléments de direction et de motorisation sont disposés à l'opposé de la zone d'articulation des demi-châssis, respectivement aux extrémités avant et arrière du véhicule. L'invention se propose de remédier aux divers inconvénients exposés ci-dessus en réalisant une structure de châssis pour véhicule de voirie articulés, formée à partir de tubes cintrés.

Plus particulièrement, chaque demi-châssis sera formé à partir d'un simple tube en acier cintré.

L'invention sera décrite ci-après à l'aide d'un exemple non limitatif de réalisation, et en référence aux dessins annexés, dans lesquels :
- la figure 1 est une vue du dessus d'un châssis articulé de véhicule de voirie formé suivant l'invention et

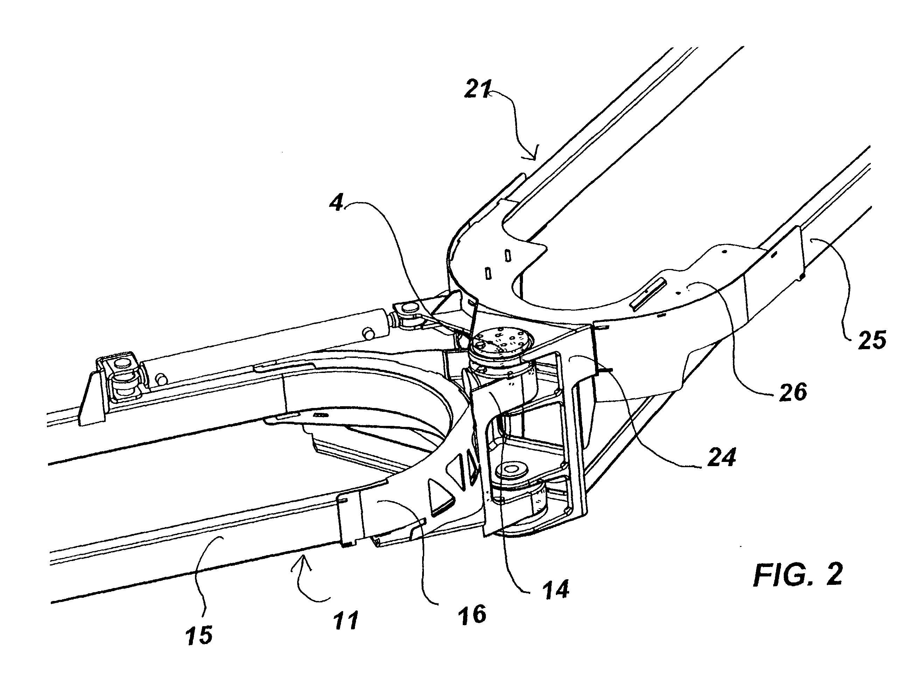

- la figure 2 est une vue de détail montrant l'articulation entre les deux parties du châssis.

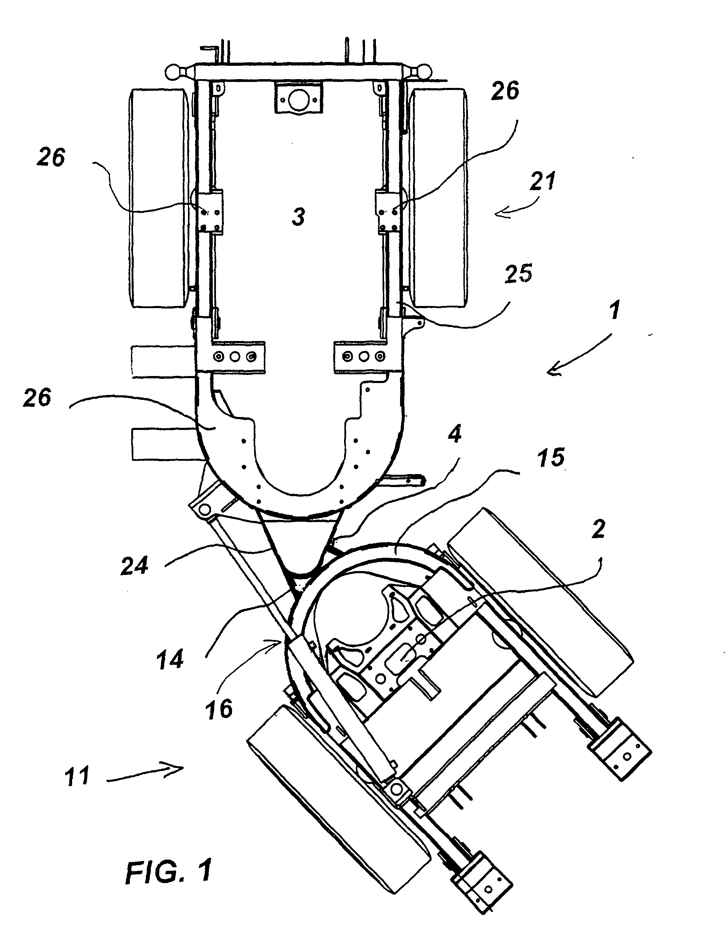

En référence aux dessins annexés, et plus particulièrement à la figure 1, la structure de châssis selon l'invention, désigné sous la référence générale (1), est composée d'une partie avant (11) et d'une partie arrière (21).

Les moyens d'aspiration (2) sont disposés sous la partie avant (11). La cuve de réception (3) des déchets aspirés est montée sur la partie arrière (21).

Les demi-châssis (11) et (21) sont chacun formés à partir d'un simple tube cintré en forme de U.

Les tubes (15, 25) sont disposés l'un en regard de l'autre, de telle manière que leurs parties coudées respectives soient face à face.

La partie ouverte de chaque tube en « U » est de ce fait dirigée vers l'extérieur, à savoir vers l'avant en ce qui concerne le tube (15) formant le demi-châssis avant et vers l'arrière pour le tube (25) qui constitue le demi-châssis arrière.

Les tubes (15) et (25) formant les demi-châssis sont renforcés dans les zones soumise à des contraintes importantes, au moyen d'éléments de renfort en tôle (16) et (26) entourant les parties coudées desdits demi-tubes.

L'articulation entre les demi-châssis (11) et (21) est réalisée au moyen de deux pièces en acier (14) et (24) soudées, respectivement sur les éléments en tôle (16) et (26) fixées sur les tubes (15) et (25).

On pourra ainsi renforcer la structure du châssis sans pour autant en augmenter le poids dans des proportions de nature à compromettre sa maniabilité et son excellent rapport qualité-prix.

Les deux pièces soudées (14) et (24) sont reliées par une articulation à pivot (4).

De manière connue, divers flexibles (non représentés) relient les deux parties du châssis.

De manière préférentielle, l'axe de l'articulation (4) sera interrompu dans sa partie médiane pour autoriser le passage des flexibles par le centre.

Ceci constitue un avantage important par rapport aux solutions connues. En effet, sur les châssis traditionnels, le passage des flexibles s'effectue sur les côtés, au dessus ou en dessous du point de rotation. Ceux-ci subissent de ce fait des contraintes beaucoup plus importantes, avec des risques élevés de rupture ou d'usure prématurée.

La description qui précède permet d'apprécier la grande simplicité de la structure de châssis pour véhicule de voirie selon la présente invention.

Chaque demi-châssis est réalisé à partir d'un nombre restreint d'éléments couramment disponibles, facilement usinables et de faible coût de revient.

La forme des tubes composant les demi-châssis, et leur disposition, sont parfaitement adaptées à la géométrie du véhicule et à ses déplacements.

Bien entendu, la structure de châssis n'est pas limitée à la forme de réalisation décrite ci-dessus, et pourra recevoir toute variante sans que l'on sorte du cadre défini par les revendications.

En particulier, les dimensions des tubes cintrés pourront varier.

## Revendications

1. Structure de châssis pour véhicule de voirie comportant deux demi-châssis (11, 21) articulés autour d'un axe (4) et formés chacun à partir d'un tube cintré (15, 25), les tubes (15, 25) étant disposés l'un en regard de l'autre de telle manière que leurs parties coudées respectives soient face à face, **caractérisée en ce que** les tubes (15, 25) ont la forme d'un « U » dont partie ouverte est dirigée vers l'extérieur respectivement des extrémités avant et arrière du véhicule et comportent des éléments de renfort en tôle (16, 26) entourant lesdites parties coudées.

2. Structure de châssis suivant la revendication 1, **caractérisée en ce que** l'axe de l'articulation (4) comporte une interruption dans sa partie médiane pour autoriser le passage par le centre des flexibles reliant les deux demi-châssis (11) et (21).

## Patentansprüche

1. Fahrgestell für Arbeitsfahrzeug mit zwei Halbrahmen (11, 21) mit Knicklenkung um einen Gelenkzapfen (4), die jeweils aus einem gebogenen Rohr (15, 25) gebildet sind, wobei die Rohre (15, 25) gegenüberliegend angeordnet sind, so dass ihre gebogenen Teile jeweils einander gegenüber stehen, **dadurch gekennzeichnet, dass** die Rohre (15, 25) die Form eines U haben, dessen Öffnung jeweils nach außen zum vorderen bzw. hinteren Fahrzeugende hin gerichtet ist, und Verstärkungselemente aus Blech (16, 26) aufweisen, welche die besagten gebogenen Bereiche umgeben.

2. Fahrgestell nach Anspruch 1, **dadurch gekennzeichnet, dass** der Gelenkzapfen (4) im mittleren Bereich unterbrochen ist, um die mittige Durchführung der Schläuche zu ermöglichen, welche die beiden Halbrahmen (11) und (21) verbinden.

## Claims

1. Frame structure for utility vehicle comprising two half-frames (11, 21) articulated around a joint pin (4) and each formed using a bent tube (15, 25), the tubes (15,25) being arranged opposite one another so that their respective bent parts are face to face, **characterised in that** the tubes (15, 25) are U-shaped and have an open part which is directed outwards respectively from the front and rear ends of the vehicle and comprising sheet metal reinforcement elements (16, 26) surrounding said bent parts.

2. Frame structure according to claim 1, **characterised in that** the joint pin (4) has an interruption in its centre to allow the flexible hoses linking the two half-frames (11, 21) to pass via the centre.
